Europäisches Patentamt

European Patent Office

Office européen des brevets

(19)

(11) EP 0 904 655 B1

(12) EUROPEAN PATENT SPECIFICATION

(45) Date of publication and mention
of the grant of the patent:
**18.02.2004 Bulletin 2004/08**

(51) Int Cl.$^7$: **H04N 5/217**

(86) International application number:
**PCT/EP1997/002993**

(21) Application number: **97925068.5**

(22) Date of filing: **09.06.1997**

(87) International publication number:
**WO 1997/048225 (18.12.1997 Gazette 1997/54)**

(54) **CALIBRATION METHOD AND SYSTEM FOR IMAGING DEVICES**

VERFAHREN UND VORRICHTUNG ZUR KALIBRIERUNG VON BILDAUFNAHMEGERÄTEN

PROCEDE ET SYSTEME D'ETALONNAGE POUR DISPOSITIFS DE FORMATION D'IMAGES

(84) Designated Contracting States:
**AT BE CH DE DK ES FI FR GB GR IE IT LI LU MC
NL PT SE**

(30) Priority: **14.06.1996 GB 9612534**

(43) Date of publication of application:
**31.03.1999 Bulletin 1999/13**

(73) Proprietor: **SIMAGE OY
02200 Espoo (FI)**

(72) Inventors:
• **CAO, Tielang
FIN-02150 Espoo 15 (FI)**
• **PYYHTIÄ, Jouni, Ilari
FIN-01360 Vantaa (FI)**
• **SPARTIOTIS, Konstantinos, Evangelos
FIN-00170 Helsinki (FI)**

(74) Representative: **Spaargaren, Jerome et al
Electronic Intellectual Property,
Suite 308,
The Foundry,
156 Blackfriars Road
London SE1 8EN (GB)**

(56) References cited:
**EP-A- 0 350 328        EP-A- 0 601 534
WO-A-97/05742         DE-A- 3 732 820
DE-C- 4 305 251        GB-A- 2 149 605
US-A- 5 047 861        US-A- 5 354 987**

• **OPTICAL ENGINEERING, vol. 28, no. 8, August
1989, pages 887-896, XP000047283 POROPAT G
V: "NONLINEAR COMPENSATION FOR
RESPONSIVITY NONUNIFORMITIES IN
CADMIUM MERCURY TELLURIDE FOCAL
PLANE DETECTOR ARRAYS FOR USE IN THE 8
TO 12 M SPECTRAL REGION"**

## Description

The invention relates to a system and method for calibrating and correcting the output of a semiconductor imaging device.

Calibration techniques are typically used on a variety of devices to determine a scale that defines the true value of a parameter as a function of the device output. For example calibration is applied in calorimeters and spectrometers in order to identify the energy spectrum output from the device. Typically, calibration involves operating the device under known conditions, for example known amount of energy impinging on a calorimeter, and determining the output as a function of these conditions. During subsequent operation the calibration function is inverted and the output from the device is used to derive the impinging energy using the inverse calibration function.

EP 0601 534 discloses a method of calibration of an infrared imaging device with compensation for non-uniformity of infrared focal plane arrays. The calibration operation measures the response generated by detector elements in the focal plane array to a wide range of known signal flux levels of infrared radiation produced by a umform black body under controlled conditions. This type of method has many disadvantages. For example, an expensive radiation source is required. Also, multiple radiation exposures are needed each time the imaging device is to be calibrated.

Probably the most widely used semiconductor pixel devices to date have been based on charge coupled device (CCD) technology. In a CCD device, analog output signals are digitized and processed to form an image. Japanese patent applications JP07/236093 and JP07/236094 describe CCD systems which apply a correction factor to pixel outputs to derive a value representative of the optical light incident on the pixels of a CCD device. In JP07/236093, the correction is applied for the ambient photodetector dark current. For a given image pick-up time the charge per pixel due to the dark detector current is stored and then applied as a correction value to the pixel outputs to give a corrected value for the light incident on the pixels when light is present. In JP07/236094, a reference image sensor is used to store a value for converting a charge value to an amount of incident light and then this 'correction' value is applied to the output of the real image sensor to convert charge into a value representative of the light incident on the imaging device.

Imaging devices, systems and methods for performing high energy radiation imaging (e.g., X-rays, gamma-rays, beta-rays and alpha particles) are disclosed in WO-A-95/33332 owned by the assignee of the current application. The imaging devices allow multiple successive radiation hits at a pixel detector location (pixel cell) to be converted in a semiconductor substrate into respective charge pulses. The charge pulses at each pixel detector location are accumulated on a respective pixel circuit. The accumulated charge, which can correspond to tens, hundreds or thousands of radiation hits, is then output and digitized to produce an image pixel value that ideally should be equivalent to the number of accumulated radiation hits for the corresponding pixel location.

Each imaging device comprises tens or even hundreds of thousands of pixels. Each pixel circuit carries its own charge accumulating capacitance and its own switching and protection components, all of which are identical only to the extent of the limits of current or future processing technology (e.g., ASIC technology). This means in practice that there is non-uniformity in the pixel arrays. Moreover, the output from each pixel should ideally be linearly related to the number of accumulated radiation hits at that pixel, but in practice the relationship is non-linear. These factors put limitations on the quality of the output of such imaging devices. These limitations cannot be addressed by comparison to a reference sensor because a reference sensor itself will have different properties and parameters.

Accordingly, it is an aim of the present invention to provide a method and system for mitigating the limitations of prior art devices.

In accordance with a first aspect of the invention, there is provided a method of calibrating pixel values output from respective pixel cells of an imaging device each of said pixel cells comprising a pixel circuit for accumulating charge in response to radiation incident on said imaging device, as defined in claim 1, the method comprising:

a) determining a conversion function for each pixel cell, said conversion function being representative of a non-linear response of a pixel and being formed by the combination of a response function and a scale parameter including steps of:

i) applying pre-defined pixel circuit input voltages to each pixel circuit and determining said response function for each pixel circuit as being representative of the relationship of pixel output values to said pre-defined applied pixel circuit input voltages; and

ii) determining said scale parameter for each pixel cell as being representative of the differences in accumulated charge stored by different pixel cells in response to an applied input radiation intensity; and

b) defining a data structure comprising an entry for said conversion function determined for each pixel cell and accessible for applying said conversion function determined for said pixel cell to a value derived from the output of said pixel cell for computing a corrected value having a desired relationship to radiation incident on said pixel cell.

Step (a)(i) preferably comprises, for each pixel cell, fitting pixel input values as a function of corresponding pixel output values to provide a parameterized relationship between the pixel input values and the corresponding pixel output values.

The response function is preferably determined by varying externally a pixel input to the pixel cells and recording the pixel output value. The externally varied pixel input value can be a voltage value of a charge storing means of the pixel cell, for example a FET and/or a capacitor.

Preferably also, step (a)(ii) comprises providing a pixel input signal to the pixel cells and recording the output of the respective pixel cells. The pixel input signal can be an amount of radiation from an external source.

Preferably, the output pixel value from a pixel cell for the amount of radiation defines the scale parameter for the pixel cell.

Preferably also, step (a)(i) is performed before step (a)(ii) and the scale parameter is derived by inputting the output pixel value from the pixel for the amount of radiation to the response function.

The table preferably has, at each entry, fitted parameters of the response function and the scale parameter for a respective pixel cell.

For each pixel cell, pixel input values are preferably fitted as a function of the corresponding pixel output values to provide a parameterized relationship between the pixel input values and the corresponding pixel output values. Here the table has at each entry fitted parameters of the conversion function for a respective pixel cell.

Preferably, the table values are determined prior to image acquisition. The table is then used during image acquisition or otherwise before image display to convert pixel output values for respective pixel cells to provide converted output values for those pixel cells.

In a preferred embodiment of the invention the converted output values are linearly related to the number of accumulated radiation hits or to the accumulated amount of light on the corresponding pixel cell. However, other relationships could be generated if required.

The method can also include updating the table with new values when factors which influence pixel cell performance change, for example where factors include temperature variations, signal integration times, exposure times, etc. change.

In accordance with another aspect of the invention, there is provided an imaging system, as defined in claim 18, comprising an imaging device having an array of pixel cells for producing pixel output values for generating a digital image.

In an embodiment the invention, a map (table) with an entry, having a set of parameters, for each pixel is created, each entry containing all necessary parameters for that pixel to correct for the non-linear response of each pixel output to incident radiation and for the non-uniformity between pixels. Thus the grey or colour scale assigned to each pixel value can be made directly and linearly proportional to the total number of radiation hits accumulated in the pixel. Of course, another desired relationship between the grey or colour scale assigned to each pixel and the number of radiation hits accumulated in the pixel could be generated instead.

It should be noted that most prior art semiconductor radiation imaging systems are based on single radiation hit counting. In other words, when a radiation hit is incident on the detector it is read out and compared to a threshold charge value. If the observed charge is more than the threshold value (usually meant to protect against electronic noise and scattered radiation hits) then the hit is accepted. In this mode of operation non-uniformity between pixels and non-linear response of each pixel is not an issue as long as the collected charge is more than the threshold value.

The present invention finds particular application to multiple hit charge accumulation devices such as is described in WO-A-95/33332. Such devices provide the advantage of being able to accumulative radiation incident on a pixel cell, with the result that it can cope with any practically useful radiation intensity when single hit counting is simply not feasible. Applications with high radiation intensity include, but are not limited to, conventional X-ray radiography, mammography, X-ray real time imaging etc.

The calibration map can be created once before every image or more rarely if the pixel device and its environment do not change substantially (e.g. once a day or once a month). The calibration map is preferably stored after conversion in an analog to digital converter (ADC), for example on an ADC card or in a computer used for image processing and display.

Embodiments of the invention are described hereinafter, by way of example only, with reference to the accompanying drawings in which:

Figure 1 is a schematic block diagram of an imaging system;
Figure 1a is a schematic representation of a FET;
Figure 2 is a schematic circuit diagram of an example of a pixel circuit for an imaging device of the imaging system of Figure 1;
Figure 3 is a schematic diagram of part of an imaging array and control electronics of the imaging system of Figure 1;
Figure 4 is a schematic representation of the readout stages for a pixel circuit;
Figure 5 is a schematic representation of the drop of a gate voltage with respect to time;
Figure 6 is a schematic representation of an example of a relationship between a pixel output voltage and ADC counts;
Figure 7 is a schematic representation of a table for mapping parameters; and

**EP 0 904 655 B1**

Figure 8 represents a quadratic equation.

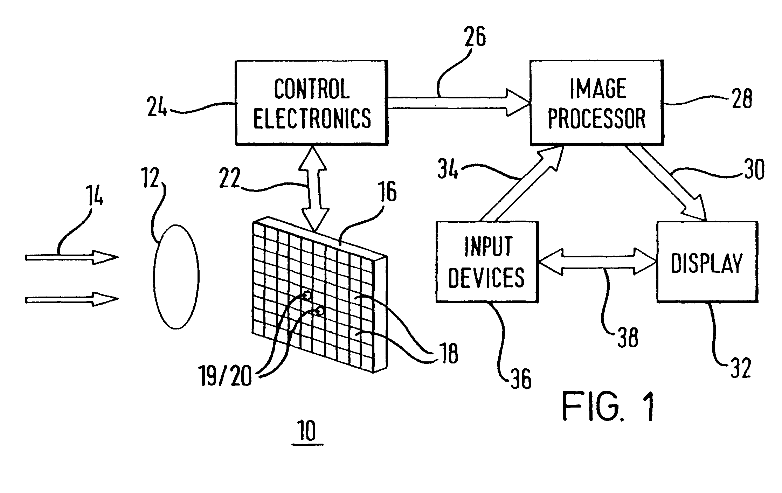

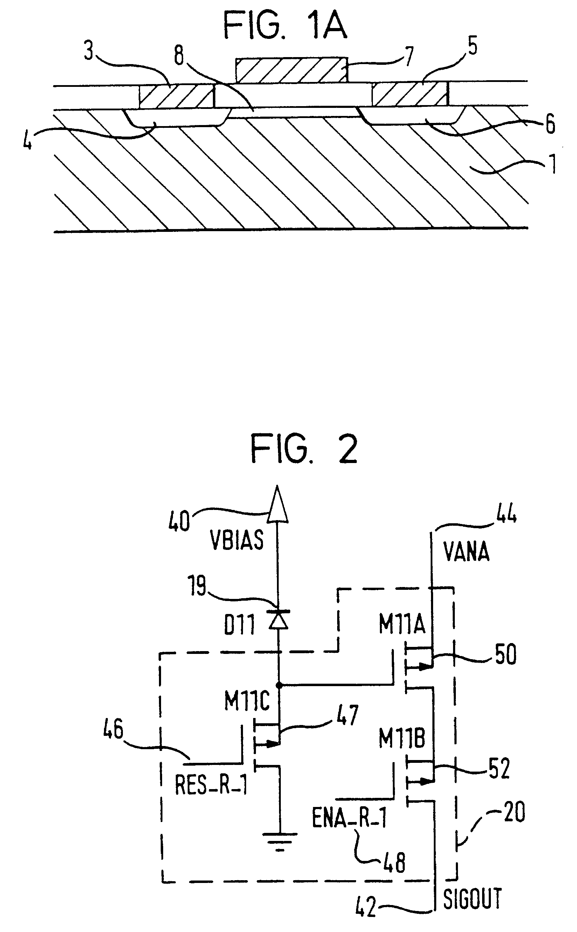

Figure 1 is a schematic representation of an example of an imaging system 10 including an imaging device as described in WO-A-95/33332. As illustrated the imaging system is used for imaging of an object 12 subjected to radiation 14. The radiation may, for example, be X-ray radiation and the object 12 may, for example, be a part of a human body.

The imaging device comprises an Active-pixel Semiconductor Imaging Device (ASID) 16 comprising a plurality of pixel cells 18. The imaging device detects directly high energy incident radiation such as X-rays, γ-rays, β-rays or α-rays and accumulates at each pixel cell, by means of a randomly accessible, active, dynamic pixel circuit on or adjacent to a corresponding pixel cell detector, values representative of the radiation incident at that pixel cell.

The ASID can be configured as a single semiconductor substrate (e.g., silicon) with each pixel cell comprising a pixel detector 19 and an active pixel circuit 20. Alternatively, the ASID can be configured on two substrates, one with an array of pixel detectors 19 and one with an array of active pixel circuits 20, the substrates being mechanically connected to each other by, for example, conventional bump-bonding technology.

Each pixel cell 18 is in effect defined on the substrate by electrodes (not shown) which apply a biasing voltage to define a detection zone (i.e., the pixel detector 19) for the pixel cell 18. Active pixel circuits 20 in the form of electronic structures (e.g., of transistors, capacitors, etc.) can be defined on each pixel cell 18 or at a corresponding location on the associated second substrate to accumulate charge created in the pixel detector when, for example, a photon or a charged particle of radiation is incident on the semiconductor detection zone of the pixel cell 18. An active pixel circuit 20 and the pixel detector 19 can be of the order of a few tens of microns in size (e.g., 10-50μm). An example of an active pixel circuits is described with reference to Figure 2.

The pixel detectors 19 are formed with a detection zone such that, when a photon is photo-absorbed in the semiconductor substrate 16 at a pixel cell 18 creating an electric charge or when a charged radiation ionizes the detection zone of the semiconductor substrate 16 at a pixel cell 18, an electric pulse flows from the semiconductor substrate detection zone to the active pixel circuit 20 for that pixel cell 18. A value associated with the electric pulse is then accumulated in an active circuit element, either directly as a charge value or as an equivalent voltage or current value such that new charge created from subsequent incoming radiation is added continuously. Examples of possible accumulating devices are an integrated capacitor or the gate of an integrated transistor. The charge accumulation process in an active pixel circuit 20 continues until control signals are issued from control electronics 24 to start a process of reading out information by addressing each pixel cell, effectively in a random access manner, from each individual pixel cell. During readout of the accumulated charge values, charge continues to be accumulated because the readout is always done individually for detecting pixel cells. Pixel circuits may selectively be reset after readout to discharge the charge accumulation circuit elements, and only then are pixels inactive for a very short time (practically no dead time as will be shown). Thus, only during resetting are individual pixels inactive.

Figure 1a shows the charge accumulation principle of one example of a pixel circuit charge accumulation element. In this example a field effect transistor is formed on a semiconductor substrate. Specifically, n+ doped regions 4 and 6 are formed for the source and drain, respectively, in a P-type silicon substrate 1. Electrodes for the source 3 and drain 5 are formed in an oxide layer 2, a gate electrode 7 being formed over the oxide layer 2. Charge is accumulated on the gate electrode 7 of a field effect transistor (MOSFET) by virtue of the FET gate capacitance. As charge accumulates on the FET gate it decreases the electron concentration in the FET inversion layer 8 (the layer with minority-electron carriers needed for the FET operation). The maximum charge that can be accumulated depends on the minimum allowable electron density in the inversion layer. The charge accumulation is therefore not affected by any dark current coming from the bulk silicon as in the case of a CCD, because charge is not accumulated in any depleted volume. Charge accumulation capacity is determined only by the total FET gate area (which can be substantially close to the pixel circuit area), the oxide layer thickness (which can be as thin as few nm or tens of nm) and the FET dynamic range (which determines the maximum gate voltage). It should be noted that this is just an example of a pixel circuit charge accumulation element, and charge can be accumulated in any suitable charge accumulating means implemented in the corresponding pixel circuit.

The pixel pitch can be as small as 10μm which results in excellent position resolution and consequently excellent image resolution.

Figure 2 illustrates one preferred example of an active pixel circuit 20 for a pixel cell in an example of an imaging device using field effect transistors (FETs) arranged as a cascode connected amplifier. VBIAS 40 is a bias voltage input across the detection zone forming the pixel detector 19 of the pixel cell. The pixel detector 19 is represented by the diode symbol D11. In the pixel circuit itself, SIGOUT 42 is an analogue signal output and VANA 44 an analogue power supply input. RES-R-1 is a reset input and ENA-R-1 is an enable input for the pixel circuit. Charge is accumulated in the gate of a transistor M11A 50 when both the RES-R-1 46 and ENA-R-1 48 inputs are low.

The gate capacitance substantially forms the input node capacitance (total capacitance) thus maximizing charge storage ability. In this circuit, substantially all of the input node capacitance arises from the charge accumulation transistor M11A 50. For a 35μm by 35μm pixel circuit the M11A 50 capacitance can be 2pF and the FET gate voltage dynamic range can be at least 2Volts. This corresponds to about 25,000,000 electrons in storage capacity which is more than 100 times the capacity of a CCD of the same pixel size. It should be noted that the 2pF of the FET capacitance in the above example substantially forms all of the input node capacitance of the pixel cell. In the above example of 35 by 35μm pixels the total parasitic capacitance of the detector and the other elements in each pixel circuit and corresponding pixel detector is in the range of a few fF or tens of fF. The capacitance of the charge storage device should be maximized and in any case be substantially bigger than the parasitic capacitance in each pixel cell. In the example above the capacitance of the FET acting as a charge accumulating device in the pixel circuit is more than 90% of the total capacitance of the pixel cell comprising a pixel detector and the corresponding pixel circuit. As a result of this, substantially all collected charge will be accumulated in the charge accumulating FET rather than being shared among the detectors, and the rest of the pixel circuit elements.

It will be appreciated that this circuit provides an example, only, where charge accumulating capacitance is maximised using a pixel charge storage device (such as a FET gate or a capacitor) that accounts for most of the input node capacitance for each pixel.

To read the pixel cell, ENA-R-1 is taken to a high state, which allows current to flow from the transistor M11A 50 through the transistor M11B 52 to SIGOUT 42. The pixel circuit is reset by taking RES-R-1 to high, whereupon after RES-R-1 has been at high for merely a few microseconds, any accumulated charge will have been removed from the gate of the transistor M11A 50. Immediately after RES-R-1 46 goes to a low level, charge can begin to accumulate at the gate of the transistor M11A 50. If no reset pulse is supplied to the reset input RES-R-1 46, then it is to be noted that a reading operation when the enable input ENA-R-1 goes high does not destroy the charge but instead merely causes a current flow directly proportional to the accumulated charge. This allows multiple readings without resetting.

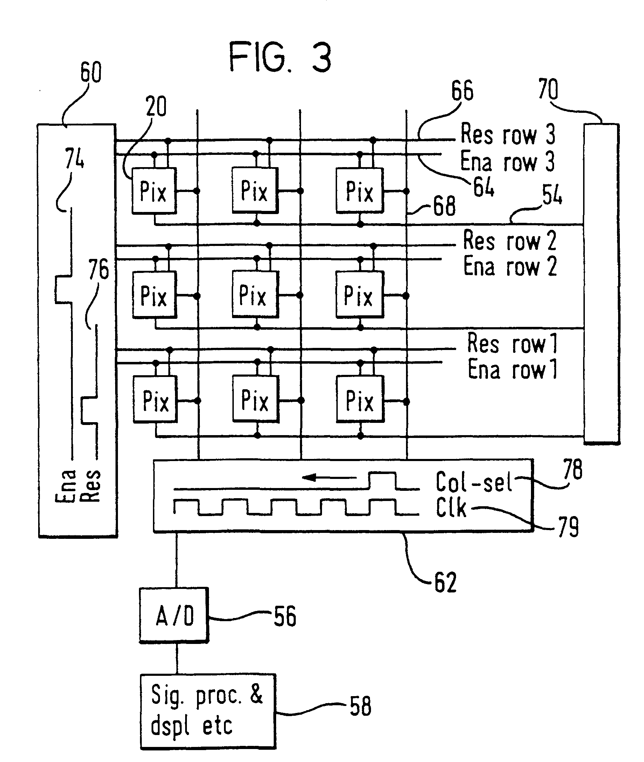

Figure 3 is a schematic representation of one possible configuration of the control electronics 24 of Figure 1 and the relationship of the control electronics 24 to an m x n matrix of the active circuits 20 of the pixel cells 18. For ease of illustration an array of 9 pixel cells is illustrated in Figure 3 and only some of the signal lines which make up the path 22 in Figure 1 are shown. It will be appreciated that an imaging device will normally include a significantly larger number of pixel cells than are shown in Figure 3. The row select logic 60 controls the row readout (ENA 74) and the row reset (RES 76) and the column logic 62 enables (COL-SEL) the readout of accumulated charge values from each pixel circuit 20 in response to a clock signal 79.

The control electronics 24 include row select logic circuits 60, column address logic circuits 62, power supply circuits 70, Analogue to Digital Converter (ADC) 56 and the signal processing circuits 58. Preferably some, if not all, of the control electronics 24 is implemented on the substrate 16 at the periphery of the image array formed by the array of pixel cells 18.

The power supply circuits 70 provide power for the individual active circuits 20 on the pixel cells 18 via lines 54 (shown schematically in Figure 3) and can additionally be arranged to supply the biasing voltage via lines (not shown) for the electrodes defining the pixel cells.

The row select logic 60 provides signals via row enable and reset lines 64 and 66, respectively (also shown schematically in Figure 3), for selecting columns for the reading and resetting, respectively of the individual active circuits 20 of the pixel cells 18. The row select 64 and row reset 66 lines are connected to the enable input ENA-R-1 48 and the reset input RES-R-1 46, respectively of each of the pixel circuits of the row. Also shown in the row select logic 60 are row enable 74 and row reset 76 signals for scanning successive rows. It can be seen that the reset pulse 76 follows the row enable pulse 74 to cause resetting of the active circuits after reading.

The column select logic 62 effectively comprises a multiplexer for selecting signals output via the column lines 68 (also shown schematically in Figure 3), each column line being connected to the SIGOUT output 42 of each pixel circuit 20 in that column. The COL-SEL signal 78 represented in the column select logic 62 thus selects columns for reading the individual active circuits 20 of the pixel cells 18 currently selected by the row enable pulses 74. In the embodiment shown the column select pulse is clocked for successive column positions in response to the clock CLK 79 during one row enable period, so that the accumulated charge value of a respective active pixel circuit on the row currently selected is clocked out at each clock pulse before the row select pulse proceeds to the next row. Each active pixel circuit of the row just read is then reset simultaneously by the row reset pulse 76.

The connections shown in Figure 3 are readily realisable using conventional double metallisation technology. Although, as described with reference to Figure 3, the pixels are read out sequentially in a predetermined order, it will be appreciated that the pixels are in effect accessed in a random access manner by means of separate row and column enable signals. It will be appreciated also that the scanning direction could be reversed (rows to columns) or indeed individual pixels could be accessed in a totally random order by suitable row and column enable signals. It will also be appreciated that the degree of sequential or parallel processing can easily be modified to match the needs of each application. For example all rows can be set simultaneously at an enable high state so that the column select clock will output in parallel all rows, thereby increasing the readout rate. The resetting of rows need not match the readout rate. After multiple readings each row may be reset at a lower rate than the readout rate. It will be appreciated that the designation of rows and columns is arbitrary and can be reversed.

Accordingly, therefore, a semiconductor pixel imaging system operating on the radiation accumulation mode as disclosed in WO-A-95/33332, each pixel charge value is digitized in an ADC and then output to the image processor as a digital pixel output value in the form of an ADC count for each pixel cell.

For example, when an image is accumulated in a single exposure the device output is an array $ADC_i$, where the subscript refers to the pixel number. The number of ADC counts for a pixel i is a measure of the analog charge value that was stored on that pixel. In turn the charge Q accumulated on a pixel i is directly proportional to the number of accumulated radiation hits, i.e. $Q_i = Q_i$(Number of hits).

The relationship between the number of incident radiation hits and the accumulated charge is linear. Also, a constant defines the conversion from the number of radiation hits to a charge value, which constant depends on the energy of the radiation and the choice of the semiconductor substrate for converting incident radiation to an electrical pulse. However, in practice, the amount of accumulated charge on a pixel and the output value of that pixel is often not linear and it is the output pixel value that is eventually digitized. Moreover, if the same amount of charge is accumulated in different pixels, then the output from these pixels may not be the same. Ideally, for a given amount of accumulated charge corresponding to a given number of incident radiation hits, any pixel should provide the same output (a current or a voltage value). Once again, when the amount of accumulated charge is doubled or tripled on each pixel then the output of the pixel should ideally respond linearly by providing double or triple output current (or voltage). In practice, however, non-uniformity between individual pixels and non-linear response of each pixel occur.

It is an aim of an embodiment of the invention to provide a correction for each pixel so that a corrected ADC count number for each pixel linearly and uniformly represents the accumulated charge and consequently the number of accumulated radiation hits. The mapping function for the output value correction in an embodiment of the invention is extracted using data from the imaging device itself and not from a reference sensor/device. A reference sensor/device will always be only approximately similar to the imaging device and cannot exactly reflect the non-linear response and non-uniformity of the imaging device.

The method employed by the present invention will now be described in general terms before describing a preferred embodiment intended for use with the semiconductor pixel imaging system disclosed in WO-95/33332.

However it will be appreciated that the present invention is not limited to this preferred embodiment and can be applied to other semiconductor pixel imaging devices and systems, for example CCD-based systems or systems having pixel devices employing thin film technology (Amorphous Si, Selenium devices etc.).

Each pixel in a semiconductor imaging device has charge storage means for storing charge created from converted incoming radiation. Although the devices described WO-A-95/33332 comprise a charge storage device in the form of a capacitor and/or a Field Effect Transistor (FET), in other imaging devices charge can also be stored in the stray pixel capacitance. Stored charge changes a feature of the charge storing device. For example, if the charge storing device is a FET then stored charge changes the voltage of the gate where the charge is stored. A different gate voltage will result in a change in an output from the pixel, usually either a change in a voltage or a current output value.

In an example of the invention, and prior to accumulating an image, for each pixel a parameter that determines the amount of stored charge is varied externally. For different known values of that parameter the output of the pixel is digitized to provide an ADC count value. A function is then fitted between the input and digitized output values to determine a relationship between the ADC count values and the corresponding pixel parameter values, which in turn relates to the stored charge.

As an example of this, consider an example of an imaging device having an FET for each pixel cell. The FET for each pixel cell accumulates charge from pulses generated in a corresponding pixel detector for the pixel cell in respect of respective radiation hits. The FET gate where the charge is accumulated is reset at the beginning of each cycle of operation to a certain voltage, for example 5 Volts. Then as electrons are accumulated in response to the pulses from respective radiation hits, the gate voltage drops.

The amount by which the gate voltage drops depends on the number of electrons accumulated and the FET gate capacitance, that is $V=Q/C$, where V is the difference in the gate voltage (a value between 0 and 5 Volts), Q is the accumulated number of electrons and C is the FET gate capacitance. Where holes are collected rather than electrons, a reset voltage of 0 volts or some other value close to 0 Volts can be used and the then voltage level will rise in response to the pulses from respective radiation hits.

Either way, the final gate voltage results in a pixel output value being formed, which in most cases is either a voltage or a current value. This pixel output value is then digitized.

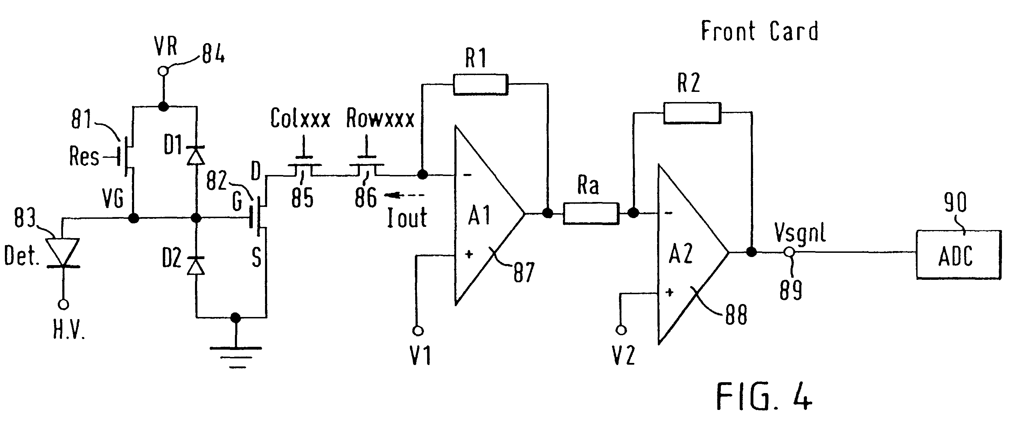

In one example of the invention, in order to calibrate the pixel cells, the FET gate reset voltage is adjusted externally, for example to 3Volts, by applying 3Volts over lines 54 to the power supply inputs VANA 44 of each of the pixel circuits (i.e. to VR4 in Figure 4). This is equivalent to the reset being 5Volts and then dropping by 2 Volts because of accumulated electrons. In other words, the use of the externally applied selective reset voltage can simulate the effect of number of radiation hits, in a manner which can be replicated in each of the pixel cells. Then by reading the pixel output value and digitizing it for the selected reset voltage (e. g., 3 Volts) with no radiation the response of the pixel cell is equivalent to result of accumulated electrons dropping the gate voltage by 2 Volts. The pixel output for different reset voltages is recorded in terms of the respective ADC counts. For each reset voltage value a certain number of ADC counts will be obtained. The relationship between the reset voltage values and the ADC counts is then fitted to a function (for example a quadratic function) to obtain a function for computing the relationship between voltages at the gate where electrons are being accumulated and the ADC counts.

In other words, for each pixel cell, a parameter related to the amount of accumulated charge is externally varied and the corresponding pixel output is recorded to derive the response function of each pixel. By subsequently using the function which has been determined for processing pixel output values, a non-linear response correction can be applied.

As well as the correction of the non-linear response of each pixel to accumulated charge, an embodiment of the invention can also address the problem of how to account for non-uniformity between pixels. Although the response function will relate the parameter (e.g. gate voltage on the FET) on each pixel to accumulated charge, between two different pixels with the same parameter the accumulated charge may not be the same. This will be explained with the example of an FET mentioned above. Two different pixels with two different FETs implemented to accumulate charge will in general have slightly different FET gate capacitances. Even if the FET gate voltages are the same, the charge on the first pixel would be $Q1=C1 \times V$, and on the second pixel would be $Q2=C2 \times V$.

The final ADC counts that will be assigned grey or colour values should reflect the total charge on each pixel and not just the voltage of the FET gate. Therefore, a correction is applied for this non-uniformity between pixels.

To achieve this, after the response function for each pixel has been obtained, an 'empty' image is accumulated using a radiation source (for example and X-ray source) without an object between the radiation source and the imaging device. In this way some amount of radiation enters each detector pixel. The pixel outputs are then recorded and used to obtain a scale parameter. A scale parameter is obtained through the response function defined previously for a given pixel output value. This is called a scale parameter for a given pixel because any subsequently obtained pixel input value with the radiation source and object to be imaged will be compared to it and the corrected pixel value will be defined with respect to this parameter. In other words, the scale parameter is derived by inputting the output pixel value from the pixel for the amount of radiation to the response function.

There has been described a method for calibrating/correcting pixel values of a pixel imaging device and acquiring pixel values linearly and uniformly in proportion to the number of incident radiation hits on each pixel. The method comprises a step of obtaining the non-linear response of each pixel to incident radiation and a second step of obtaining the non-uniformity correction between pixels. A table, or map, or array with one entry per pixel is stored, possibly on a card carrying the ADCs 56, or possibly in a memory of a computer forming the image processor 28 for generating images from the pixel data. Each entry in the table comprises a number of parameters defining a response function for each pixel and a scale parameter to account for non-uniformity between pixels.

In the following a specific embodiment of the invention for the case of an imaging device as described in WO-A-95/33332 will be described.

Figure 4 is a schematic presentation of a single pixel circuit and its associated readout process. A reset FET 81 can initialize the gate voltage of a charge storing FET 82 to some user defined value. After the charge storing FET 82 has been reset to some value $V_R$, it accumulates charge for a predetermined period of time $t_i$. The gate voltages create a current in FET 82 when that pixel is been read out by changing the control voltages $Col_{xxx}$ and $Row_{xxx}$ in FET 85 and FET 86. This current generates a voltage over resistor R1 in amplifier A1 87. The signal is further amplified in amplifier A2 88 defined by resistor values R2 and RA and offset by voltage V2 for the ADC 90 input level 89.

During the integration period for accumulating charge, if there is no signal from X-rays (or other radiation) the FET 82 accumulates the charge from the detector leakage current $I_{dl}$. At the end of the integration period the voltage of the FET 2 gate has a value of:

$$V_G(t_i)=V_R-\frac{I_{dl} \cdot t_i}{C_F}$$

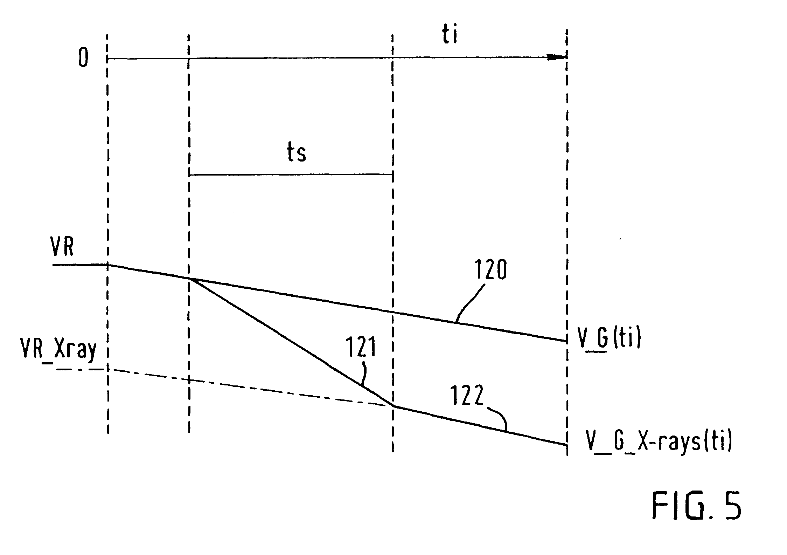

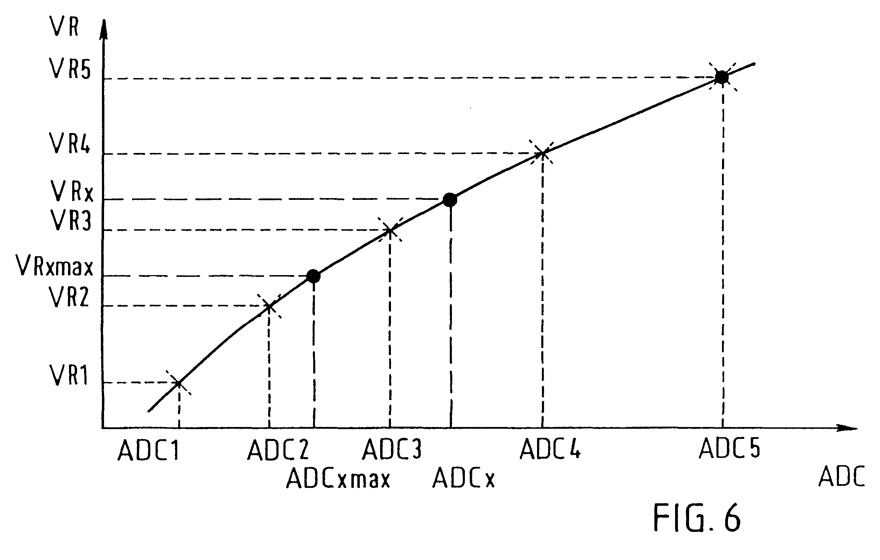

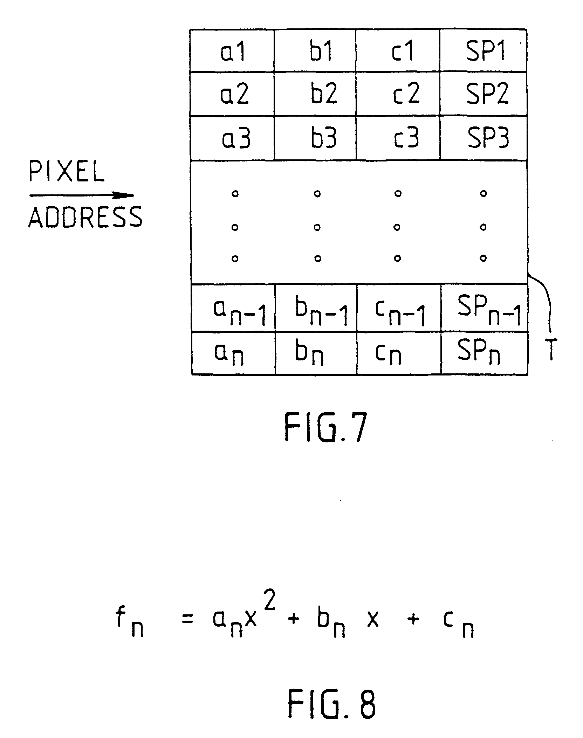

(where $C_F$ is the charge storing capacitance of the FET 82 gate). This is shown in Figure 5 where curve 120 indicates the drop of the gate voltage VG(ti) as a function of time when only the detector leakage current is accumulated (i.e. no X-rays are present). By varying externally the reset voltage $V_R$, we get each time a different gate voltage $V_G(t_i)$ for the charge storing FET 82. Each time we read out and digitize the pixel values. Figure 6 shows the relationship of the reset voltage to the number of ADC counts. A second order polynomial (for example as represented schematically in Figure 8) is fitted to the respective curves to define the response function for each pixel circuit. In other words, for each pixel we take a set of measurements, varying each time the reset voltage and recording the acquired number of ADC counts. As is clearly seen from Figure 6, the response function is non-linear. This means that double or triple voltage drops on the FET 82 charge storing gate does not produce two or three times the output at the ADC level.

Once the response function for each pixel has been determined and the fitted parameters established, the second step of the calibration is to take into account that the pixels do not have identical characteristics, such as charge storing capacitance. Typically with today's technology on processing ASICs the variation on the capacitances of each pixel can be of the order of 10%. The pixel non-uniformity is eliminated as follows.

It is noted that the grey or colour scale value assigned to each pixel value should be related to the ratio of received radiation hits (e.g. X-rays) to the maximum number of radiation hits (X-rays) received if no-object is imaged. This way the total number of available display scales is evenly divided according to the number of X-rays. Each pixel receives some current of X-rays Is during the exposure time ts.

Figure 5 illustrates what happens when a flux of X-rays (the signal) is absorbed during time ts. The starting reset voltage is VR. Curve 121 shows that charge accumulated because of the X-rays adds up to the charge from the detector leakage current. Curve 122 shows that after the X-ray exposure is completed the detector leakage current continues to be accumulated. At the end of the integration period the voltage of the FET 82 gate is:

$$V_{G_x}\text{-}rays(t_i)=V_R\text{-}\frac{I_{DL}\bullet t_i}{C_F}\text{-}\frac{I_S\bullet t_S}{C_F}$$

(where $I_S$ is the charge current created from the incoming flux of X-rays, $t_s$ is the X-ray exposure time and $V_R$ is the reset voltage chosen for the operation of the imaging device).

Before an image of an object is taken, an empty image (with no object) is acquired to define the maximum X-rays content as recorded in terms of ADC counts. From the fitted curve in Figure 6 $ADC_{Xmax}$ can be identified, which represents the maximum expected signal from X-rays. From the fitted curve in Figure 6 the corresponding $V_{RXmax}$ can also be identified. This is an equivalent reset voltage. It is the reset voltage that would have caused, after integration time $t_i$, the same voltage on the charge storing FET 82 gate. So

$$V_{RXmax} = V_R - \frac{I_{Smax}\bullet t_S}{C_F}.$$

Consequently, after $V_{RXmax}$ has been determined, the object to be imaged is positioned on top of the pixel detector and a measurement using X-rays is acquired. For each pixel then we get some ADC value, $ADC_x$, and from the curve for that pixel, as shown in Figure 6, the equivalent

$$V_{RX} = V_R - \frac{I_S\bullet t_S}{C_F}$$

is acquired. Then the grey or colour digital scale assignment is:

$$N\frac{V_R\text{-}V_{rx}}{V_R\text{-}V_{Rxmax}}=\frac{\dfrac{I_S\bullet t_S}{C_F}}{\dfrac{I_{Smax}\bullet t_S}{C_F}}N=\frac{I_S}{I_{Smax}}N$$

where N is the total number of available grey scales. $V_{Rxmax}$ is the scale parameter, which, as can be seen from the above equation, defines the total scale or range for the pixel cell as identified in Figure 6. From the above equation it can be seen that the effect of the capacitance of each individual pixel is cancelled out. Basically this is achieved by taking an empty exposure and recording the maximum response of each pixel ( i.e. $V_{Rxmax}$). The values of the polynomial coefficients ($a_i$, $b_i$ and $c_i$ - see Figure 8) and the scale parameter ($SP_i$) are stored for each pixel (at a respective addressable entry in a table T - see Figure 7) as parameters defining a conversion function representative of a non-linear response of a pixel cell and/or differences between pixel cells. This is then used during image acquisition or before image display to correct for the non-linear response of a pixel cell and/or differences between pixel cells.

In conclusion a calibration/correction method for a semiconductor imaging pixel device has been disclosed. Each digital pixel value is adjusted to correct for possible non-linear response of the output of each pixel to its input. Furthermore the digital pixel values are adjusted to account for their non-uniform characteristics, such as non-identical charge storing capacitances. Preferably the calibration/correction for the non-linear response of each pixel individually is achieved by varying externally the input parameter that influences the pixel output and recording the digital pixel output as a function of the known input parameter. The function is then reversed to acquire the pixel analog input values as a function of the digital output values. Also preferably the calibration/correction for the non-uniform pixel characteristics is done by recording the maximum and minimum output of each pixel individually to some flux of incoming radiation and no flux respectively. When imaging an object, each image pixel will then experience a condition between these two extremes.

It is therefore the aim of the current invention to provide a method for relating the output of each pixel to the amount of incident radiation taking correctly into account the non-linear response of each pixel individually to the incident radiation and the non-uniformity among pixels. It is evident that the method described above takes correctly into account other more trivial effects such as for example the continuous detector leakage (or dark) current.

The calibration method disclosed offers fine images not only in connection of perfected pixel values but also in connection of combined pixel values to acquire an image of a low contrast object. In such a case pixel values must be corrected prior to combination and display to provide accurately the information about the total initial number of incident radiation hits for each group of pixels.

The calibration/correction map (table) containing the response function and non-uniformity correction for each pixel is preferably stored at the ADC card or at the image processor (computer) stage. Each pixel has a correction entry in the calibration map that requires 4 bytes of disk space or even less if data compression techniques are employed. The addressing of the table can be directly in response to the addressing of the array of pixels (e.g. using the address signals from 60 and 62 in Figure 3), or alternatively the addressing can be done after initial storage of the pixel output values. Therefore the calibration map poses no difficulty to existing commercially available ADC and computer systems.

While specific embodiments have been described, it is to be understood that many modifications and alternatives can be made without departing from the invention.

In particular, while the above calibration technique is particularly intended for displaying images acquired with the imaging device disclosed in WO-A-95/33332, it will be appreciated that it can be applied to improve and perfect images acquired with some other pixel semiconductor imaging devices such as CCDs, amorphous Si pixel devices, thin film employing pixel devices etc. It will also be appreciated that the above disclosed method can also perfect images acquired in the infrared, optical and other part of the spectra besides high energy radiation (such as X-rays, gamma rays, beta rays, alpha rays etc.)

Also, in the embodiment of the invention described above, a conversion function is determined by externally applying reset voltages to determine a response function for each pixel cell as representative of the non-linear relationship of the pixel output values to pre-defined pixel input values and then irradiating the imaging device to determining a scale parameter for each pixel cell as representative of non-uniformity between pixel cells from the relative pixel output values for a given input radiation intensity.

**Claims**

1. A method of calibrating pixel values output from respective pixel cells of an imaging device each of said pixel cells comprising a pixel circuit (20) for accumulating charge in response to radiation incident on said imaging device, the method comprising:

   a) determining a conversion function for each pixel cell, said conversion function being representative of a non-linear response of a pixel and being formed by the combination of a response function and a scale parameter including steps of:

   i) applying pre-defined pixel circuit input voltages to each pixel circuit and determining said response function for each pixel circuit as being representative of the relationship of pixel output values to said pre-defined applied pixel circuit input voltages; and
   ii) determining said scale parameter for each pixel cell as being representative of the differences in accumulated charge stored by different pixel cells in response to an applied input radiation intensity; and

   b) defining a data structure comprising an entry for said conversion function determined for each pixel cell and accessible for applying said conversion function determined for said pixel cell to a value derived from the output of said pixel cell for computing a corrected value having a desired relationship to radiation incident on said pixel cell.

2. A method according to Claim 1, wherein step (a)(i) comprises, for each pixel cell, fitting pixel input values as a function of corresponding pixel output values to provide a parameterized relationship between said pixel input values and said corresponding pixel output values.

3. A method according to Claim 1 or Claim 2, wherein said response function is determined by varying externally a pixel input to said pixel cells and recording a resulting pixel output value.

4. A method according to Claim 3, where said externally varied pixel input value is a reset voltage value of a charge storing means of said pixel cell.

5. A method according to Claim 4, wherein said charge storing means comprises a FET and/or a capacitor.

6. A method according to any preceding Claim, wherein step (a)(ii) comprises providing a pixel input signal to said pixel cells and recording said output-of said respective pixel cells.

7. A method according to claim 6, wherein said pixel input signal is an applied amount of radiation from an external source.

8. A method according to claim 7, wherein said output pixel value from a pixel cell for said amount of radiation is used to define said scale parameter for said pixel cell.

9. A method according to any preceding Claim, wherein step (a)(i) is performed before step (a)(ii), and wherein said scale parameter is derived by inputting said output pixel value from said pixel for said amount of radiation to said response function.

10. A method according to any preceding Claim, wherein said data structure has at each entry fitted parameters of said response function and said scale parameter for a respective pixel cell.

11. A method according to Claim 1, wherein step a(ii) comprises recording the maximum and minimum output of each pixel cell in response to some flux of incoming radiation and no flux respectively.

12. A method according to any preceding Claim, wherein said data structure entries are determined prior to image acquisition.

13. A method according to any preceding Claim, comprising using said data structure to convert pixel output values for respective pixel cells to provide converted output values for those pixel cells.

14. A method according to any preceding Claim, wherein said desired relationship is that converted output values are linearly related to the number of accumulated radiation hits or to the accumulated amount of light on said corresponding pixel cell.

15. A method according to any preceding Claim, comprising updating said data structure with new values when factors which influence pixel cell performance change.

16. A method according to Claim 15, wherein said factors include temperature variations, signal integration times, exposure times.

17. A method according to any preceding Claim, wherein said values derived from the output from each pixel cell are digital values.

18. An imaging system (10) comprising an imaging device (16) having an array of pixel cells (18) each of said cells comprising a pixel circuit for accumulating charge in response to incident radiation and for producing pixel output values for generating a digital image, said system comprising:

means for determining a conversion function for each pixel cell (18) by applying a pre-defined pixel circuit input voltage to each pixel circuit, said conversion function being representative of a non-linear response of a pixel cell and/or differences between pixel cells and being formed by the combination of a response function and a scale parameter, said response function for a said pixel cell being representative of a non-linear relationship of pixel output values to pre-defined pixel circuit input voltage values and a scale parameter for each said pixel cell being representative of differences in accumulated charge stored by different pixel cells in response to an applied input radiation intensity;
a data structure (T) comprising an entry for each pixel cell for said conversion function determined for said pixel cell; and
means (28) for computing corrected pixel values for a digital image from a value derived from the output from each pixel cell using said conversion function stored for said pixel cell in the corresponding data structure entry, said corrected pixel values output having a desired relationship to radiation incident on said pixel cell.

19. A system according to Claim 18, comprising analogue to digital conversion means (56, 90) for digitizing the output from each pixel cell to form said value derived therefrom.

20. A system according to Claim 18 or Claim 19, comprising means (28) for computing a maximum pixel output value for a pixel cell corresponding to a predetermined maximum amount of radiation incident on said pixel cell, for defining a maximum of a digital scale for said pixel cell.

21. A system according to any one of Claims 18 to 20, comprising charge storing means, for example a FET (82) and/or a capacitor.

**Patentansprüche**

1. Verfahren zum Kalibrieren von Pixelwerten, die von entsprechenden Pixelzallen einer Abbildungseinrichtung ausgegeben werden, wobei jede der Pixelzellen einen Pixelschaltkreis (20) für das Sammeln von Ladung in Antwort auf Strahlung, die auf die Ablldungseinrichtung auftrifft, wobei das Verfahren aufweist

    a) Bestimmen einer Umwandlungsfunktion für jede Pixelzelle, wobei die Umwandlungsfunktion repräsentativ für eine nichtlineare Antwort eines Pixels ist und durch die Kombination einer Antwortfunktion und eines Skalenparameters gebildet wird, die die Schritte aufweist:

      i) Anlegen von vorbestimmten Pixelschaltkreiseingangsspannungen an jeden Pixelschaltkreis und Bestimmen der Antwortfunktion für jeden Pixelschaltkreis als repräsentativ für die Beziehung der Pixelausgangswerte zu den vorher bestimmten angelegten Pixelschaltkreiseingangsspannungen, und
      ii) Bestimmen des Skalenparameters für jede Pixelzelle als repräsentativ für die Differenzen In der gesammelten Ladung, die von unterschiedlichen Pixelzellen gespeichert wird, in Antwort auf eine angelegte Eingangsstrahlungsintensität, und

    b) Definieren einer Datenstruktur, die einen Eintrag für die Umwandlungsfunktion aufweist, die für jede Pixelzelle bestimmt wird und auf die zugegriffen werden kann, für das Anwenden der Umwandlungsfunktion, die für die Pixelzelle bestimmt wurde, auf einen Wert, der aus dem Ausgang der Pixelzelle abgeleitet wird, für das Berechnen eines korrigierten Wertes mit einer gewünschten Beziehung zu der eingefallenen Strahlung auf diese Pixelzelle.

2. Verfahren nach Anspruch 1, wobei der Schritt (a)(i) für Jedes Pixel aufweist das Anpassen der Pixeleingangswerte als eine Funktion der entsprechenden Pixelausgangswerte, um eine parametrisierte Beziehung zwischen den Pixeleingangswerten und der entsprechenden Ausgangswerten zur Verfügung zu stellen.

3. Verfahren nach Anspruch 1 oder Anspruch 2, wobei die Antwortfunktion bestimmt wird durch externes Varlieren eines Pixeleingangs zu den Pixelzellen und Aufzeichnen eines resultierenden Pixelausgangswertes.

4. Verfahren nach Anspruch 3, wobei der extern variierte Pixeleingangswert ein Rücksetzspannungswert einer Ladungsspeichereinrichtung der besagten Pixelzelle Ist.

5. Verfahren nach Anspruch 4, wobei die Ladungsspeichereinrichtung ein FET und/oder eine Kapazität aufweist.

6. Verfahren nach einem der vorherigen Ansprache, in dem Schritt (a)(ii) aufweist das Zurverfügungstellen eines Pixeleingangssignals zu den Pixelzellen und das Aufzelchnen des Ausgangs der entsprechenden Pixelzellen.

7. Verfahren nach Anspruch 6, wobei das Pixeleingangssignal eine angelegte Strahlungsmenge von einer externen Quelle ist.

8. Verfahren nach Anspruch 7, wobei der Ausgangspixelwert von einer Pixelzelle für die besagte Strahlungsmenge verwendet wird, um den Skalierungsparameter für die besagte Pixelzelle zu definieren.

9. Verfahren nach einem der vorherigen Ansprüche, in dem Schritt (a)(i) durchgeführt wird, bevor Schritt (a)(ii) durchgeführt wird, und in dem der Skalierungsparameter bestimmt wird durch Eingeben des Ausgangspixelwertes von dem Pixel für die Strahlungsmenge zu der Antwortfunktion.

10. Verfahren nach einem der vorherigen Ansprüche, wobei die Datenstruktur an jedem Eintrag Parameter der Antwortfunktion und der Skalierungsparameter für eine entsprechende Pixelzelle hat.

11. Verfahren nach Anspruch 1, in dem Schritt (a)(ii) aufweist das Aufzeichnen des maximalen und minimalen Ausgangs von jeder Pixelzelle in Antwort auf einen ankommenden Strahlungsstrom bzw. keinen Strahlungsstrom.

12. Verfahren nach einem der vorherigen Ansprüche, wobei die Datenstrurktureinträge vor der Bilderfassung bestimmt werden.

13. Verfahren nach einem der vorherigen Ansprüche, das die Verwendung der Datenstruktur aufweist, um Pixelausgartgswerte für entsprechende Pixelzellen umzuwandeln, um für diese Pixelzellen umgewandelte Äusgangswerte zur Verfügung zu stellen.

14. Verfahren nach einem der vorherigen Ansprüche, wobei die gewünschte Beziehung derart Ist, daß umgewandelte Ausgangswerte linear mit der Anzahl von gesammelten Strahlungstrefrem über der gesammelten Uchtmenge auf der entsprechenden Pixelzelle verknüpft sind.

15. Verfahren nach einem der vorherigen Ansprüche, das die Aktualisierung der Datenstruktur mit neuen Werten aufweist, wenn Faktoren, die die Pixelzelleistung beeinflussen, sich ändem.

16. Vertahren nach Anspruch 15, wobei die Faktoren die Temperaturvariation, die Signalintegrationszeiten, die Belietungszeiten beinhalten.

**17.** Verfahren nach einem der vorherigen Ansprüche, wobei die Werte, die von dem Ausgang von Jeder Pixelzelle abgeleitet werden, digitale Werte sind.

**18.** Abbildendes System (10), das eine abbildende Einrichtung (16) aufweist mit einer Anordnung bzw. einem Array aus Pixelzellen (18), wobei jede der Pixelzellen einen Pixelschaltkreis für das Sammeln von Ladung in Antwort auf einfallende Strahlung aufweist und für das Erzeugen von Pixelausgangswerten für das Erzeugen eines digitalen Bildes, wobei das System aufweist:

eine Einrichtung für das Bestimmen einer Umwandlungsfunktion für jede Pixelzelle (18) durch Anlegen einer vorbestimmten Pixelschaltkreiseingangsspannung an Jedem Pixelschaltkreis, wobei die Umwandlungsfunktion repräsentativ für eine nichtlineare Antwort einer Pixelzelle und/oder Unterschieden zwischen den Pixelzellen ist und gebildet wird durch die Kombination einer Antwortfunktion und eines Skalierungsparameters, wobei die Antwortfunktion für die besagte Pixelzelle repräsentativ für eine nichtlineare Beziehung der Pixelausgangswerte zu den vorbestimmten Pixelschaltkreiseingangsspannungswerten ist und ein Skalierungsparameter für jede Pixelzelle repräsentativ für Unterschiede In der in Antwort auf eine angelegte Eingangsstrahlungsintensität gesammelte Ladung ist, die von unterschiedlichen Pixelzellen gespeichert ist, eine Datenstruktur (T), die einen Eintrag für jede Pixelzelle für die Umwandlungsfunktion, die für die Pixelzelle bestimmt ist, aufweist und eine Einrichtung (28) für das Berechnen von korrigierten Pixelwerten für ein digitales Bild aus einem Wert, der aus dem Ausgang von Jeder Pixelzelle unter Verwendung der für jede Pixelzelle in dem entsprechenden Datenstruktureintrag abgelegten Umwandlungsfunktion abgeleitet wird, wobei die korrigierten Pixelwertausgaben eine gewünschte Beziehung zu der einfallenden Strahlung auf die Pixelzellle hat.

**19.** System nach Anspruch 18, das eine Analog-/Digital-Wandlereinsichtung (56, 59) aufweist für das Digitalisieren des Ausgangs von jeder Pixelzelle, um den Wert, der hieraus abgeleitet wird, zu bilden.

**20.** System nach Anspruch 18 oder Anspruch 19, das eine Einrichtung (28) für das Berechnen eines maximalen Pixelausgangswertes für eine Pixelzelle aufweist, der einer vorbestimmten Maximalstrahlungsmenge entspricht, die auf die Pixelzelle auftrifft, für das Definieren eines Maximums einer digitalen Skala für diese Pixelzelle.

**21.** System nach einem der Ansprüche 16 bis 20, das eine Ladungsspeichereinnchtung, beispielsweise ein FET (82) und/oder einen Kondensator aufweist.

**Revendications**

**1.** Procédé d' étalonnage de valeurs de pixels fournies en sortie par des cellules de pixels respectives d'un dispositif de formation d'image, chacune desdites cellules de pixels comprenant un circuit de pixel (20) pour accumuler une charge en réponse à un rayonnement incident sur ledit dispositif de formation d'image, le procédé comprenant :

a) la détermination d'une fonction de conversion pour chaque cellule de pixel, ladite fonction de conversion étant représentative d'une réponse non linéaire d'un pixel et étant formée par la combinaison d'une fonction de réponse et d'un paramètre d' échelle, comportant les étapes suivantes :

i) l'application de tensions d'entrée de circuits de pixels prédéfinies à chaque circuit de pixel, et la détermination de ladite fonction de réponse pour chaque circuit de pixel comme étant représentative de la relation entre des valeurs. de sortie de pixels et lesdites tension d'entrée de circuits de pixels prédéfinies appliquées ; et
ii) la détermination dudit paramètre d'échelle pour chaque cellule de pixel comme étant représentative des différences de charge accumulée stockée par différentes cellules de pixels en réponse à une intensité de rayonnement d'entrée appliquée ; et

b) 1a définition d'une structure de données comprenant une entrée pour ladite fonction de conversion déterminée pour chaque cellule de pixel et accessible pour l'application de ladite fonction de conversion déterminée pour ladite cellule de pixel à une valeur déterminée à partir de la sortie de ladite cellule de pixel pour calculer une valeur corrigée ayant une relation souhaitée avec le rayonnement incident sur ladite cellule de pixel.

**2.** Procédé selon la revendication 1, dans lequel l'étape (a)(i) comprend, pour chaque cellule de pixel, l'ajustement des valeurs d'entrée de pixels en fonction de valeurs de sortie de pixels correspondantes pour produire une relation paramétrée entre lesdites valeurs d'entrée de pixels et lesdites valeurs de sortie de pixels correspondantes.

**3.** Procédé selon la revendication 1 ou la revendication 2, dans lequel ladite fonction de réponse est déterminée en faisant varier extérieurement un pixel fourni en entrée auxdites cellules de pixels et en enregistrant une valeur de sortie de pixel résultante.

**4.** Procédé selon la revendication 3, dans lequel ladite valeur d'entrée de pixel amenée à varier extérieurement est une valeur de tension de réinitialisation d'un moyen de stockage de charge de ladite cellule de pixel.

**5.** Procédé selon la revendication 4, dans lequel ledit moyen de stockage de charge comprend un transistor à effet de champ (FET) et/ou un condensateur.

**6.** Procédé selon l'une quelconque des revendications précédentes, dans lequel l'étape (a) (ii) comprend la fourniture d'un signal d'entrée de pixel auxdites cellules de pixels et l'enregistrement de ladite sortie desdites cellules de pixels respectives.

**7.** Procédé selon la revendication 6, dans lequel ledit signal d'entrée de pixel est une quantité de rayonnement appliquée par une source externe.

**8.** Procédé selon la revendication 7, dans lequel ladite valeur de pixel de sortie provenant d'une cellule de pixel pour ladite quantité de rayonnement est utilisée pour définir ledit paramètre d'échelle pour ladite cellule de pixel.

**9.** Procédé selon l'une quelconque des revendications précédentes, dans lequel l'étape (a) (i) est exécutée avant l'étape (a) (ii) et dans lequel ledit paramètre d'échelle est déterminé en fournissant en entrée à ladite fonction de réponse ladite valeur de pixel de sortie provenant dudit pixel pour ladite quantité de rayonnement.

**10.** Procédé selon l'une quelconque des revendications précédentes, dans lequel ladite structure de données a pour chaque entrée des paramètres ajustés de ladite fonction de réponse et dudit paramètre d'échelle pour une cellule de pixel respective.

**11.** Procédé selon la revendication 1, dans lequel l'étape a (ii) comprend l'enregistrement de la sortie maximum et minimum de chaque cellule de pixel, respectivement en réponse à un certain flux de rayonnement incident et à une absence de flux.

**12.** Procédé selon l'une quelconque des revendications précédentes, dans lequel lesdites entrées de la structure de données sont déterminées avant l'acquisition d'image.

**13.** Procédé selon l'une quelconque des revendications précédentes, comprenant l'utilisation de ladite structure de données pour convertir des valeurs de sortie de pixels pour des cellules de pixels respectives afin de fournir des valeurs de sortie converties pour ces cellules de pixels.

**14.** Procédé selon l'une quelconque des revendications précédentes, dans lequel ladite relation souhaitée est une relation selon laquelle des valeurs de sortie converties sont liées linéairement au nombre de détections de rayonnement accumulées ou à la quantité accumulée de lumière sur ladite cellule de pixel correspondante.

**15.** Procédé selon l'une quelconque des revendications précédentes, comprenant la mise à jour de ladite structure de données avec de nouvelles valeurs lorsque des facteurs qui influencent les performances des cellules de pixels varient.

**16.** Procédé selon la revendication 15, dans lequel lesdits facteurs comprennent des variations de température, des temps d'intégration de signal, et des temps d'exposition.

**17.** Procédé selon l'une quelconque des revendications précédentes, dans lequel lesdites valeurs déterminées à partir de la sortie de chaque cellule de pixel sont des valeurs numériques.

**18.** système de formation d'image (10) comprenant un dispositif de formation d'image (16) ayant un groupement de cellules de pixels (18), chacune desdites cellules comprenant un circuit de pixel pour accumuler une charge en réponse à un rayonnement incident, et pour produire des valeurs de sortie de pixels pour générer une image numérique, ledit système comprenant :

des moyens pour déterminer une fonction de conversion pour chaque cellule de pixel (18) en appliquant une tension d'entrée de circuit de pixel prédéfinie à chaque circuit de pixel, ladite fonction de conversion étant représentative d'une réponse non linéaire d'une cellule de pixel et/ou de différences entre des cellules de pixels et étant formée par la combinaison d'une fonction de réponse et d'un paramètre d'échelle, ladite fonction de réponse pour ladite cellule de pixel étant représentative d'une relation non linéaire de valeurs de sortie de pixels à des valeurs de tensions d'entrée de circuits de pixels prédéfinies et à un paramètre d'échelle pour chacune desdites cellules de pixels, qui est représentative de différences de charge accumulée stockée par des cellules de pixels différentes en réponse à une intensité de rayonnement d'entrée appliquée ;

une structure de données (T) comprenant une entrée pour chaque cellule de pixel pour ladite fonction de conversion déterminée pour ladite cellule de pixel ; et

des moyens (28) pour calculer des valeurs de pixels corrigées pour une image numérique à partir d'une valeur déterminée sur la base de la sortie de chaque cellule de pixel en utilisant ladite fonction de conversion stockée pour ladite cellule de pixel dans l'entrée de la structure de données correspondante, lesdites valeurs de pixels corrigées fournies en sortie ayant une relation souhaitée avec un rayonnement incident sur ladite cellule de pixel.

19. Système selon la revendication 18, comprenant des moyens de conversion analogiques et numériques (56, 90) pour numériser la sortie de chaque cellule de pixel, afin de former ladite valeur déduite à partir de celle-ci.

20. Système selon la revendication 18 ou la revendication 19 , comprenant des moyens (28) pour calculer une valeur de sortie de pixel maximum pour une cellule de pixel correspondant à une quantité maximum prédéterminée de rayonnement incident sur ladite cellule de pixel, pour définir un maximum d'une échelle numérique pour ladite cellule de pixel.

21. Système selon l'une quelconque des revendications 18 à 20, comprenant des moyens de stockage de charge, par exemple un FET (82) et/ou un condensateur.

FIG. 1

EP 0 904 655 B1

FIG. 1A

FIG. 2

# FIG. 3

FIG. 4

FIG. 5

EP 0 904 655 B1

FIG. 6

| a1 | b1 | c1 | SP1 |
|----|----|----|-----|
| a2 | b2 | c2 | SP2 |
| a3 | b3 | c3 | SP3 |
| ∘  | ∘  | ∘  | ∘   |
| ∘  | ∘  | ∘  | ∘   |
| ∘  | ∘  | ∘  | ∘   |
| $a_{n-1}$ | $b_{n-1}$ | $c_{n-1}$ | $SP_{n-1}$ |
| $a_n$ | $b_n$ | $c_n$ | $SP_n$ |

T

## FIG.7

$$f_n = a_n x^2 + b_n x + c_n$$

## FIG. 8